(19) Europäisches Patentamt
European Patent Office
Office européen des brevets

(11) Publication number: **0 617 892 A1**

(12) **EUROPEAN PATENT APPLICATION**

(21) Application number: **93202525.7**

(22) Date of filing: **30.08.93**

(51) Int. Cl.[5]: **A01N 43/90**, A61K 31/365, A61K 31/71, A01N 37/40, A61K 31/60

(30) Priority: **31.03.93 ZA 932284**

(43) Date of publication of application: **05.10.94 Bulletin 94/40**

(84) Designated Contracting States: **AT BE CH DE DK ES FR GB GR IE IT LI LU NL PT SE**

(71) Applicant: **HAK PHARMA B.V.**
**Leemansstraat 2**
**NL-4250 DC Werkendam (NL)**

(72) Inventor: **Hak, Barend Willem**
**Baan 22**
**NL-4271 BS Dussen (NL)**

(74) Representative: **Siemens, Andreas Meinhard Ernest**
**Siemens & Cie.**
**Octrooi-en Merkenbureau**
**Roskam 8**
**NL-4813 GZ Breda (NL)**

(54) **A veterinary medicament for preventive treatment and therapy of cattle against parasites.**

(57) A veterinary medicament to control endo- and ectoparasites including larvae of arthropoda, for oral and parenteral therapeutical and prophylactical application, consisting of Ivermectin and N-[5-chloro-4-α-chlorophenyl-α cyano-methyl-2-methyl-phenyl-] -2-hydroxy-3,5-diiodobenzamide.

EP 0 617 892 A1

The present invention relates to the composition of a novel medicament for preventive and therapeutical treatment of cattle against the threat of ecto- end endoparasites.

With regard to the many different kinds of protozoic and bacterial parasites and often fast and wide spreading there exists a need for compounds which are not only for therapy of sick animals, but which can also be used for prevention of infections, while pollution of the environment by undesirable or dangerous chemicals should be obviated.

The composition should be applicable orally as well as parenterally to fight endo- and ectoparasites of horses, cows, sheep, goats and pigs.

The composition should be stable, easy to store and to transport.

On the other hand such a product should not influence the environment, for example the soil used by the herds; this is a problem to be considered primarily, because cattle herds can disperse metabolites over large regions, which could lead to threatening of animals and humans.

Hitherto known anthelmintics for example have been dispersed by cattle faeces over pasture and cultivation grounds; and thereby useful organisms in the soil have been destroyed.

Infection with ectoparasites, such as insects and larvae, through the skin often causes appearance of endoparasites, and since the point of time for necessary therapy is often difficult to discern in many animals, a novel composition having a broad spectrum activity and lacking the said detrimental properties will satisfy a need in wide-scale veterinary practice.

Blood-sucking round worms (nematodes) are a severe threat to live-stock, but with the known remedies against these worms the larvae of several arthropods, which appear simultaneously, could not be fought at the same time.

Moreover the remainders and metabolic products of known anthelmintic and antiparasitic medicaments pollute the pastures and may cause allergic diseases to other animals and humans.

In particular it was difficult to fight trematodes and larvae of arthropods side by side with nematodes, and in particular to provide a preventive treatment against several groups of said parasites.

The composition prepared according to the present invention meets the said requirements, and it can be used for prophylaxis as well as for therapy of cows, sheep, goats and pigs, in infections by adult worm species and by larvae stages of worm species and of arthropoda.

Many parasites have a growth cycle in several host animals, where their metabolic system demonstrates considerable adaptive power.

It is therefore an advancement, that with the present composition intestinal nematodes, lungworm species, liverworms, as well as the larvae of various dangerous and irritant arthropods could be fought at the same time with demonstrable success.

Not only the originator of Distomatosis (liverworm disease), which appears in the liverworm slug in the larval stage, encysts in the grass and is swallowed with the grass by cattle and sheep, where the sucking worm subsequently penetrates into the bile passages and causes injuries to the liver, but also Toxacara vitulorum, Trichuris ovis, Trichostrongylides, Haemonchus, Nematodirus and Strongyloides and the gadfly species Oestrus ovis, Hypoderma bovis and Hypoderma lincatum, Dermatobia hominis, Boophilus decoloratus, Chorioptes bovis and Psoroptes bovis in cattle, Cochliomya hominivorax in sheep and Metastrongylus elongatus, Ascaris and the larvae of these, Hyostrongylus rubidus, Oesophagostomum dentatum and several others could now be fought with striking results.

Now it has been found that a combination of an antibiotic and of an anthelminticum has a surprising activity against the parasites and larvae, such that the total amount of chemicals can be considerably reduced.

The veterinary medicament according to the present invention for prophylactic and therapeutic administration against parasites of cattle consists of a stable mixture of the following formulation:

Component I:

Ivermectin (22,23-dihydroavermectin-B $_{1a}$)

An antibiotic compound of microbial origin prepared by fermentation, and synthesis by selective reduction of disaccharides of oleandrosyl-derivatives of naturally formed lactones of same.
Gross formula: $C_{48}H_{74}O_{14}$
Molecular Weight: 875.10
The preparation is described in "Tetrahedron Letters",Vol.23, (1982), pages 2377-2378.

Because of the unique solubility properties of ivermectin, combination with a number of solvents and stabilizers is possible.

Component II:

N- [5-chloro-4-α-chloro-phenyl-α-cyanomethyl-2-methylphenyl] -2-hydroxy-3,5-diiodobenzamide.
Gross formula: $C_{22}H_{14}Cl_2I_2N_2O_2$.
Molecular Weight: 663.08.

It is prepared by reduction of 2-Nitro-4-chlorotoluene with Chlorobenzyl-4-cyanide in alkaline medium, reduction of the reaction product to 4-Amino-2-chloro-α-4-chlorophenyl-5-methylphenyl-acetonitrile, which is reacted with phosphorus trichloride to phosphate, which reacts with 3,5-Diiodosalicylic acid to N- [5-Chloro-4-α-chlorophenyl-α-cyanomethyl-2-methylphenyl] -2-hydroxy-3,5-diiodobenzamide.

The amounts of the above components and additive agents, which are used according to the present invention, are summarized as follows:

A. Injectable and oral solution:

| | |
|---|---|
| Component I: | 0.2-0.8 m/vol.-%. |
| Component II: | 5.0-20.0 m/vol.-% |
| Organic solvent: | 20.0-80.0 m/vol.-%. |
| adjuvants to pH = | 6-9.5. |
| water: q.s. up to | 100.0 m/vol.-%. |

B. Injectable and oral suspension:

| | |
|---|---|
| Component I: | 0.2-0.8 m/vol.-% |
| Component II: | 5.0-20.0 m/vol.-% |
| Thickening agent: | according to viscosity required. |
| Water: q.s. up to: | 100.0 m/vol.-%. |

C. Tablets:

| | |
|---|---|
| Component I: | 5.0-20.0 mg/tablet. |
| Component II: | 250.- 1000. mg/tablet. |

Ointments and boluses can be made in the same proportions by mixing with neutral carrier material.

The composition is filled into brown glass bottles, or into brown glass vials of 100 ml content.

It should be stored protected against light and is shelf-stable for several years.

It is suitable for oral and subcutaneous administration.

The suspension can also be mixed, however, with an inert unguent-forming supporting substance, and then applied, in the form of a cream or ointment, to the exposed parts of the skin or hide.

A third presentation of the composition of the invention is as follows:
The suspension is mixed with an inert solid pulverulent supporting-material, ground down to a fine homogeneous mass of suitable concentration, and then compressed to pills, tablets, suppositories and boluses.

The analytical determination of the two active components can be done by high-pressure liquid chromatography, with a column packing of Nucleosil RP 18 (particle size 10 µm).

The detection of the diiodobenzamide derivative, dissolved in acetonitrile, is done by fluorescence spectrometry, excitation at 336 nm and emission at 506 nm.

The diiodobenzamide derivative can be analytically determined furthermore by a potentiometric titration in a non-aqueous bath, by dissolving 0.3 g of the composition in 60 ml of N,N-dimethylformamide, and titration is carried out with 0.1 molar Tetrabutyl-ammonium-hydroxide solution, analytical grade.

A consumption of 1 ml of 0.1 molar Tetrabutyl-ammonium-hydroxide corresponds to 0.06631 g of N- [5-Chloro-4-(4-chlorophenyl)-cyanomethyl-2-methylphenyl] -2-hydroxy-3,5-diiodobenzamide.

The analytical determination of the ivermectin can be carried out by ultraviolet absorption in a methanolic solution (absorption at $\lambda_{max} = 244$ nm).

The keeping quality of the preparation and the stability of the concentrations of the active components have been experimentally demonstrated with a tolerance of ± 0.6%.

Acute, subacute and subchronic toxicity tests were carried out orally and subcutaneously on warm-blooded animals, showing that the subcutaneous $LD_{50}$-value was higher than 40 mg/kg body-weight.

The composition in the form as described has the important property that the serum-glutamate-pyruvate-transaminase (SPT) is pushed back in a sufficient rate.

The combination of both active components according to the present invention against nematodes, trematodes and other parasitic worms and against larvae of arthropods showed a fast paralysing activity, resulting from the blocking of adenosine-triphosphate, whereby the metabolism of the parasite in question no longer functions, and the parasite is killed and excreted.

Mammals do not meet with any harm whatsoever, because in their blood and digestive tract an inactive metabolite is formed.

The composition showed exellent activity also in tests against Haemonchus-species, which had shown severe resistance against other preparations of known composition.

**Claims**

1. A preparation of a medicament having prophylactic and therapeutic activity against threat of ecto- and endoparasites, comprising 22,23-dihydroavermectin-$B_{1a}$ (ivermectin), mixed with N- [5-chloro-4-α-chlorophenyl-α-cyanomethyl-2-methylphenyl]-2-hydroxy-3,5-diiodobenzamide.

2. A preparation of a medicament according to claim 1, comprising 0.2-0.8 m/vol.-% of ivermectin and 5.0-20.0 m/vol.-% of N- [5-chloro-4-α-chlorophenyl-α-cyanomethyl-2-methylphenyl]-2-hydroxy-3,5-diiodobenzamide, with neutral solvents and adjuvants.

3. A preparation of a medicament according to claims 1-2, manufactured as a suspension.

4. A preparation of a medicament according to claim 1, manufactured as tablets.

5. A preparation of a medicament according to claim 1, manufactured as an ointment.

6. A preparation of a medicament according to claim 1, manufactured as a bolus.

FORMULAE:

IVERMECTIN of the formula:

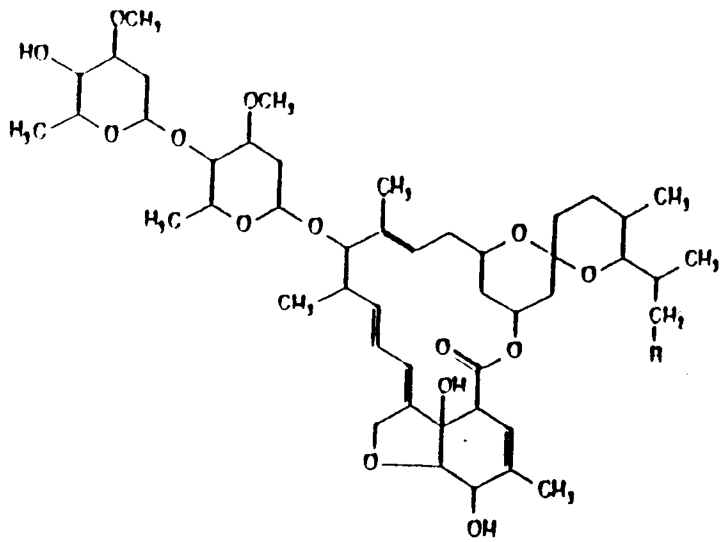

FORM. I

N-[5-chloro-4α-chlorophenyl-α-cyanomethyl-2-methylphenyl]-2-hydroxy-3,5-diiodobenzamide of the formula:

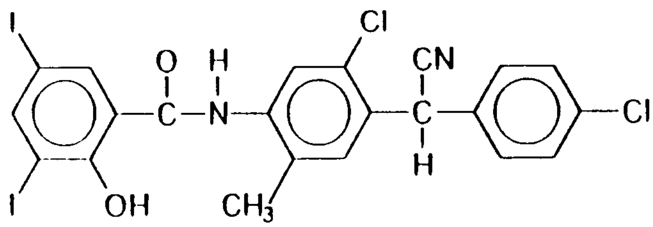

Form. II

European Patent Office

# EUROPEAN SEARCH REPORT

Application Number
EP 93 20 2525

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | BR.VET.J<br>vol. 147, no. 4 , 1991<br>pages 306 - 321<br>QUINTIN A. MCKELLAR ET AL. 'The pharmacology of flukicidal drugs'<br>* table III *<br>--- | 1-6 | A01N43/90<br>A61K31/365<br>A61K31/71<br>A01N37/40<br>A61K31/60 |
| Y | VET. REC.<br>vol. 132, no. 6 , 6 February 1993<br>pages 134 - 135<br>M.A.TAYLOR ET AL. 'Comparative efficacies of various anthelmintics against benzimidazole-resistant strains of sheep nematodes'<br>* page 134, right column *<br>--- | 1-6 | |
| Y | J.S.AFR.VET.ASSOC.<br>vol. 64, no. 2 , 1993<br>pages 71 - 75<br>J.P.LOUW ET AL. 'Overberg research projects. XV. The efficacy of different anthelmintics against field strains of nematode parasites of sheep in the southern cape province'<br>* abstract *<br>* tables 1,3 *<br>--- | 1-6 | TECHNICAL FIELDS SEARCHED (Int.Cl.5)<br>A01N<br>A61K |
| Y | VET.REC.<br>vol. 130, no. 23 , 1992<br>pages 505 - 510<br>G.C.COLES ET AL. 'Slowing the spread of anthemintic resistant nematodes of sheep and goats in the UK'<br>* page 507, right column, paragraph 2 *<br>---<br>-/-- | 1-6 | |

The present search report has been drawn up for all claims

| Place of search | Date of completion of the search | Examiner |
|---|---|---|
| MUNICH | 16 June 1994 | Tzschoppe, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

# EUROPEAN SEARCH REPORT

Application Number
EP 93 20 2525

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| Y | AUST. VET. J.<br>vol. 69, no. 11 , 1992<br>pages 283 - 285<br>R-L-KERLIN ET AL. 'The survival and fecundity of buffalo flies after treatment of cattle with three anthelmintics'<br>* abstract *<br>* page 283, introduction *<br>----- | 1-6 | |
| | | | TECHNICAL FIELDS SEARCHED (Int.Cl.5) |

The present search report has been drawn up for all claims

| Place of search | Date of completion of the search | Examiner |
|---|---|---|
| MUNICH | 16 June 1994 | Tzschoppe, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)